(19) Europäisches Patentamt
European Patent Office
Office européen des brevets

(11) Veröffentlichungsnummer: **0 006 635**
**A1**

(12) # EUROPÄISCHE PATENTANMELDUNG

(21) Anmeldenummer: **79102198.3**

(22) Anmeldetag: **29.06.79**

(51) Int. Cl.³: **C 07 F 9/38**

(30) Priorität: **01.07.78 DE 2829046**

(43) Veröffentlichungstag der Anmeldung: **09.01.80 Patentblatt 80/1**

(84) Benannte Vertragsstaaten: **BE CH DE FR GB IT LU NL SE**

(71) Anmelder: **Benckiser-Knapsack GmbH, Am Hafen 2, D-6800 Ladenburg (DE)**

(72) Erfinder: **Sommer, Klaus, Dr. Dipl.-Chem., Sandwingert 39, D-6900 Heidelberg 1 (DE)**
Erfinder: **Raab, Günter, Hurstweg 39, D-6941 Laudenbach (DE)**

(74) Vertreter: **Zellentin, Rüdiger, Dr. et al, Zweibrückenstrasse 15, D-8000 München 2 (DE)**

(54) **Verfahren zur Herstellung von Acylamino-methanphosphonsäuren.**

(57) Verfahren zur Herstellung von N-Acylaminomethanphosphonsäuren durch einstufige Umsetzung eines Nitrils mit Formaldehyd oder einer Formaldehyd abspaltenden Verbindung und phosphoriger Säure oder einer unter den Reaktionsbedingungen phosphorige Säure bildenden Verbindung bei erhöhten Temperaturen und gegebenenfalls in Gegenwart eines Lösungsmittels. Als Lösungsmittel wird vorzugsweise ein polar aprotisches Lösungsmittel verwendet. Die Umsetzung kann vorteilhaft in Gegenwart eines sauren Katalysators durchgeführt werden.

Anstelle der Reaktionspartner Nitril und Formaldehyd können auch die Produkte ihrer Umsetzung, 1,3,5-Triacyltriazane eingesetzt werden.

EP 0 006 635 A1

PATENTANWÄLTE
ZELLENTIN
ZWEIBRÜCKENSTR. 15
8000 MÜNCHEN 2

29. Juni 1979
ST/Hu

Benckiser-Knapsack GmbH
6802 Ladenburg/ Neckar

Eu 7916

Verfahren zur Herstellung von Acylamino-methanphosphonsäuren

Die vorliegende Erfindung betrifft ein Verfahren zur Herstellung von Acylamino-methanphosphonsäuren.

Die Herstellung von Acylamino-methanphosphonsäuren wird bereits in den US-PSen 2 304 156, 2 328 358 und 2 862 882 beschrieben. Nach diesen Schriften setzt man N-Methylol-Verbindungen von Carbonsäureamiden mit Phosphortrichlorid um und hydrolysiert die Reaktionsmischung anschließend mittels Essig- oder Salzsäure. Die eingesetzten Methylolverbindungen werden nach Ann. 343 (1905), 210 durch Reaktion von Amiden mit Formaldehyd oder durch Zersetzung der entsprechenden Chlormethyl-Verbindungen nach US-PS 2 131 362 gewonnen.

Der Erfindung liegt die Aufgabe zugrunde, ein Verfahren zur Herstellung von N-Acylamino-methanphosphonsäuren anzugeben, das als Eintopfreaktion unter Verwendung gut zugänglicher Ausgangssubstanzen auf einfache Weise und mit guten Ausbeuten durchführbar ist.

Diese Aufgabe wird durch ein Verfahren zur Herstellung von N-Acylamino-methanphosphonsäuren der allgemeinen Formel I

$$R-\underset{\underset{O}{\parallel}}{C}-NH-CH_2-PO_3H_2$$

in der R ein Wasserstoffatom, ein niedriger Alkylrest, ein niedriger Alkenylrest, ein Cycloalkylrest, ein niedriger Hydroxyalkylrest, ein Arylrest oder eine Gruppe $R^1$-CN ist, wobei $R^1$ eine Alkylengruppe, eine Oxydialkylengruppe oder eine Thiodialkylengruppe ist, erfindungsgemäß dadurch gelöst, daß man ein Nitril der Formel R-CN, in der R wie oben definiert ist, mit Formaldehyd oder einer Formaldehyd abspaltenden Verbindung sowie phosphoriger Säure oder einer unter den Reaktionsbedingungen phosphorige Säure bildenden Verbindung bei erhöhten Temperaturen und gegebenenfalls in Gegenwart eines Lösungsmittels zur Umsetzung bringt.

Neben der leichten Zugänglichkeit vieler Nitrile liegt ein weiterer Vorteil dieser Methode gegenüber dem bekannten Verfahren im Wegfall der Hydrolysestufe.

Erfindungsgemäß wird so verfahren, daß man Mischungen aus Nitril, Formaldehyd und phosphoriger Säure in einem Molverhältnis von 1:2:1 bis 1:1:2, vorzugsweise 1:1:1, während 3 bis 4 Stunden bei Temperaturen von 60 bis 100°C hält. Als Nitrile werden bevorzugt gut zugängliche Mononitrile wie beispielsweise Acetonitril, Propionitril, Butyronitril, Cyclohexylcyanid und Hydroxypropionitril

oder Dinitrile wie beispielsweise Oxydiacetonitril, Thiodiacetonitril, Succindinitril und Adipindinitril eingesetzt. Das Verfahren ist aber auch mit substituierten Alkylnitrilen wie beispielsweise Glycinonitril, Cyanessigester, Benzylcyanid,mit heterocyclischen Arylnitrilen wie beispielsweise Cyanopyridinen oder Cyanofuran oder mit Verbindungen wie Aminotrisacetonitril mit Erfolg durchführbar.

Formaldehyd kann sowohl als Trioxan oder Paraformaldehyd wie auch als wäßrige Lösung zur Reaktion gebracht werden. Bei Verwendung einer Formalinlöusng wird als Phosphorkomponente $PCl_3$ eingesetzt, das in der Reaktionsmischung zu $H_3PO_3$ hydrolysiert.

Die Reaktion kann mit oder ohne Lösungsmittel durchgeführt werden, wobei man jedoch der Umsetzung mit Lösungsmitteln den Vorzug gibt, um einen glatten Verlauf zu gewährleisten. Als Lösungsmittel dienen die meisten polaren, aprotischen Lösungsmittel. Besonders geeignet sind Dimethoxyäthan, Dimethyl- und Diäthyl-diglykoläther, Dioxan und Tetramethylensulfon. Anstelle der Lösungsmittel können auch die zur Umsetzung verwendeten Nitrile benutzt werden, wobei die eingesetzte Menge das 1,5- bis 5-fache des stöchiometrischen Anteils sein kann.

Es wurde weiter gefunden, daß man die Umsetzung rationell und in kurzen Reaktionszeiten durchführen kann, wenn man der Reaktionsmischung geringe Mengen saurer Verbindungen, wie konzentrierte Schwefelsäure, Halogenwasserstoffe oder Phosphorhalogenide zusetzt.

Hexahydro-1,3,5-triacyl-triazine (N-Triacyl-triazane), die man aus der Reaktion von Nitrilen mit Formaldehyd nach J.Am.Chem.Soc. 70, (1948) 3079 erhält, können anstelle von Nitril und Formaldehyd eingesetzt werden.

Die Reaktion läuft in ähnlicher Weise mit phosphoriger Säure ab, wie bei den Mischungen aus Formaldehyd, Nitril und phosphoriger Säure.

Acylamino-methanphosphonsäuren lassen sich zu Amino-methanmonophosphonsäuren hydrolysieren. Während die direkte Reaktion von Ammoniak bzw. Ammoniumchlorid mit phosphoriger Säure und Formaldehyd in der Hauptsache zu Nitrilo-tris-methanphosphonsäure neben wenig Mono- und Di-phosphonsäure führt, kann mittels Hydrolyse der genannten Acylamino-methanphosphonsäuren verhältnismäßig reine Aminomethan-monophosphonsäure erhalten werden.

Nachfolgend wird das erfindungsgemäße Verfahren anhand von Ausführungsbeispielen näher erläutert.

Beispiel 1

In 200 ml Acetonitril werden 82 g wasserfreie phosphorige Säure und 32 g Trioxan gelöst und 5 ml Phosphortrichlorid zugesetzt. Nun wird 2 Stunden unter Rückfluß gekocht, wobei sich ein hochviskoses Öl abscheidet. Das überschüssige Acetonitril wird abdestilliert und der Rückstand in wenig Wasser aufgenommen. Durch Zugabe von Aceton gewinnt man ein weißes Kristallisat. Nach Trocknen bei 60°C im Wasserstrahlvakuum werden rund 100 g N-Acetylamino-methanphosphonsäure erhalten. Durch dünnschichtchromatographische Untersuchung des Filtrats wurde festgestellt, daß die Lösung neben phosphoriger Säure noch Acetyl-amino-methanphosphonsäure und eine weitere Phosphonsäure enthält, bei der es sich wahrscheinlich um N-Acetylimino-bis-methanphosphonsäure handelt.

Analyse: gef.: C 23,7%, N 9,3%, P 20,4%
ber.: C 23,54%, N 9,15%, P 20,23%.

Beispiel 2:

82 g wasserfreie phosphorige Säure, 41 g Acetonitril und 5 ml $PCl_3$ werden in 150 ml wasserfreiem Dimethyl-diglykol gelöst und bei 100°C 30 g Paraformaldehyd portionsweise eingetragen. Nach 3stündigem Kochen unter Rückfluß ist die Reaktion beendet, das Lösungsmittel wird durch Abdekantieren vom zähen Rückstand entfernt. Anschließend erhitzt man die viskose Paste 24 Stunden mit 50 ml konzentrierter Salzsäure unter Rückfluß. Nach Einengen im Wasserstrahlvakuum zur Entfernung entstandener Essigsäure und überschüssiger Salzsäure wird der Rückstand in wenig Wasser aufgenommen und die gebildete Aminomethanphosphonsäure mit wenig Äthanol zur Kristallisation gebracht. Nach Trocknen bei 60°C über $P_2O_5$ erhält man 75 g Aminomethanphosphonsäure. Nach Umkristallisieren zeigte das Produkt folgende Analyse:

| | | | | | | |
|---|---|---|---|---|---|---|
| gef.: | C | 11,1%, | N | 12,5%, | P | 27,9% |
| ber.: | C | 10,81%, | N | 12,61%, | P | 27,90%. |

Beispiel 3:

20,5 g Acetonitril, 15 g Trioxan, 41 g phosphorige Säure und 1 ml Schwefelsäure werden in 100 ml Dimethoxyäthan gelöst und 3 Stunden unter Rückfluß gekocht. Es scheidet sich ein leicht gelbes Öl ab. Das Lösungsmittel wird abdestilliert und der ölige Rückstand zur Entfernung der phosphorigen Säure dreimal mit je 70 ml Äthylacetat extrahiert und über $P_2O_5$ bei 60°C getrocknet. Die Ausbeute beträgt 68 g. Zur Analyse wurde ein Teil erneut mit Aceton extrahiert und getrocknet.

| | | | | | | | |
|---|---|---|---|---|---|---|---|
| Analyse: | gef.: | C | 23,8%, | N | 9,0%, | P | 20,2% |
| | ber.: | C | 23,54%, | N | 9,15%, | P | 20,23%. |

Beispiel 4:

41 g Acetonitril und 137 g Phosphortrichlorid werden in Dioxan auf 40 bis 50°C erwärmt und in diese Mischung 78,9 g 37prozentiges Formalin eingetropft, wobei man die Temperatur zwischen 6o und 70°C hält. Nach weiterem 2stündigem Kochen unter Rückfluß scheidet sich eine viskose Paste ab, die als N-Acetylamino-methanphosphonsäure identifiziert werden konnte.

Beispiel 5:

21,3 g 1,3,5-Triacetyl-triazan werden mit 24,6 g phosphoriger Säure in 50 ml Tetramethylensulfon bei Temperaturen von 80 bis 90°C gehalten. Nach einiger Zeit scheidet sich ein viskoses, gelb gefärbtes Öl ab. Nach Reinigung und Kristallisation, wie in den vorherigen Beispielen beschrieben, erhält man 35 g eines farblosen Kristallisats, dessen Analyse der N-Acetylamino-methanphosphonsäure entspricht.

Anstelle des in den Beispielen 1 bis 5 eingesetzten Acetonitrils können in entsprechenden stöchiometrischen Verhältnissen auch die anderen in der Beschreibung erwähnten Mono- und Dinitrile eingesetzt werden. Die nachfolgende Tabelle enthält als Beispiele 6 bis 12 eine Aufstellung von weiteren beispielsweise in das erfindungsgemäße Verfahren eingesetzten Nitrilen bzw. Triazanen und die erhaltenen Reaktionsprodukte.

Tabelle

| Beisp. | Eingesetztes Nitril oder Triazan | Erhaltene N-Acylamino-methanphosphonsäure |
|---|---|---|
| 6 | Propionitril | N-Propionylaminomethan-phosphonsäure |
| 7 | 1,3,5-Triacryl-s-triazan | N-Acrylaminomethan-phosphonsäure |
| 8 | 1,3,5-Trimethacryl-s-triazan | N-Methacrylaminomethan-phosphonsäure |
| 9 | Butyronitril | N-Butyrylaminomethan-phosphonsäure |
| 10 | Cyclohexylcyanid | N-Cyclohexanoylaminomethan-phosphonsäure |
| 11 | 1,3,5-Tribenzotriazan | N-Benzoylaminomethan-phosphonsäure |
| 12 | 1,3,5-Tripyridino-formyltriazan | N-Pyridinoformylamino-methanphosphonsäure |

Bei der Umsetzung von Nitrilen nach dem erfindungsgemäßen Verfahren unter Bildung von N-Acylaminomethan-phosphonsäuren können selbstverständlich die Reaktionsbedingungen wie Temperatur, Reaktionszeit, Lösungsmittel und Zusätze, die Art der Aufarbeitung und Kristallisation der Reaktionsprodukte im Rahmen des erfindungsgemäßen Verfahrens durch den Fachmann unter Heranziehung des allgemeinen Fachwissens vielfältig variiert werden.

Die Salze der erfindungsgemäß erhaltenen N-Acylamino-methanphosphonsäuren können durch Neutralisation der Säuren beispielsweise mit Carbonaten oder Bicarbonaten erhalten werden.

PATENTANWÄLTE
ZELLENTIN
ZWEIBRUCKENSTR. 15
8000 MÜNCHEN 2



0006635

29. Juni 1979
ST/Hu

Eu 7916

Patentansprüche:

1. Verfahren zur Herstellung von N-Acylamino-methanphosphonsäuren der allgemeinen Formel I

$$R-\underset{\overset{\|}{O}}{C}-NH-CH_2-PO_3H_2$$

in der R ein Wasserstoffatom, ein niedriger Alkylrest, ein niedriger Alkenylrest, ein Cycloalkylrest, ein niedriger Hydroxyalkylrest, ein Arylrest oder eine Gruppe $R^1$-CN ist, wobei $R^1$ eine Alkylengruppe, eine Oxydialkylengruppe oder eine Thiodialkylengruppe ist, dadurch gekennzeichnet, daß man ein Nitril der Formel R-CN, in der R wie oben definiert ist, mit Formaldehyd oder einer Formaldehyd abspaltenden Verbindung sowie phosphoriger Säure oder einer unter den Reaktionsbedingungen phosphorige Säure bildenden Verbindung bei erhöhten Temperaturen und gegebenenfalls in Gegenwart eines Lösungsmittels zur Umsetzung bringt.

2. Verfahren nach Anspruch 1, dadurch gekennzeichnet, daß es als einstufige Eintopfreaktion durchgeführt wird.

3. Verfahren nach einem der Ansprüche 1 oder 2, dadurch gekennzeichnet, daß man als Formaldehyd abspaltende Verbindung Trioxan oder Paraformaldehyd einsetzt.

4. Verfahren nach Anspruch 1, dadurch gekennzeichnet, daß man das Reaktionsprodukt eines Nitrils R-CN mit Formaldehyd, 1,3,5-Triacyltriazan mit der Formel

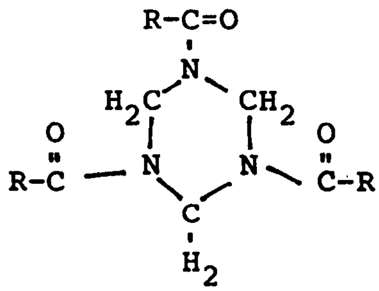

wobei R jeweils wie in Anspruch 1 definiert ist, mit phosphoriger Säure oder einer unter den Reaktionsbedingungen phosphorige Säure bildenden Verbindung umsetzt.

5. Verfahren nach einem der Ansprüche 1 bis 4, dadurch gekennzeichnet, daß R ein Wasserstoffatom, ein Methyl-, Äthyl- oder Propylrest, ein Äthylen- oder Propylenrest, ein Cyclohexylrest, ein Hydroxyäthylrest oder ein Phenylrest ist.

6. Verfahren nach einem der Ansprüche 1 bis 5, dadurch gekennzeichnet, daß die Umsetzung in einem polaren, aprotischen Lösungsmittel durchgeführt wird.

7. Verfahren nach Anspruch 6, dadurch gekennzeichnet, daß als Lösungsmittel Dimethoxyäthan, Dimethyldiglykol, Diäthyldiglykol, Dioxan, Tetramethylensulfon oder ein Überschuß des reagierenden Nitrils eingesetzt wird.

8. Verfahren nach einem der Ansprüche 1 bis 7, dadurch gekennzeichnet, daß man die Umsetzung in Gegenwart einer Säure durchführt.

9. Verfahren nach Anspruch 8, dadurch gekennzeichnet, daß man als Säure Schwefelsäure, einen Halogenwasserstoff oder ein Phosphorhalogenid einsetzt.

Europäisches Patentamt

# EUROPÄISCHER RECHERCHENBERICHT

0006635

Nummer der Anmeldung

EP 79 102 198.3

| Kategorie | EINSCHLÄGIGE DOKUMENTE — Kennzeichnung des Dokuments mit Angabe, soweit erforderlich, der maßgeblichen Teile | betrifft Anspruch | KLASSIFIKATION DER ANMELDUNG (Int.Cl.3) |
|---|---|---|---|
| | DE - A1 - 2 700 017 (MONSANTO)<br>* Anspruch 1 *<br>-- | 4 | C 07 F 9/38 |
| | DD - A - 94 993 (H. HÄCKERT et al.)<br>* Anspruch 1; Beispiel 3 und 4 *<br>-- | 1 | |
| A | DE - A - 2 322 703 (BAYER)<br>-- | | |
| A | DE - A - 2 215 434 (HOOKER)<br>-- | | |
| A | DE - B - 1 249 275 (KNAPSACK)<br>---- | | |

RECHERCHIERTE SACHGEBIETE (Int. Cl.3)

C 07 F 9/38
C 07 F 9/40

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 26-09-1979 | KAPTEYN |